# EUROPÄISCHE PATENTSCHRIFT

(11) **EP 4 103 394 B1**
(45) Veröffentlichungstag und Bekanntmachung des Hinweises auf die Patenterteilung: **10.07.2024**
(21) Anmeldenummer: 20819722.8
(22) Anmeldetag: 03.12.2020
(51) Int. Cl.: B29D 30/06

(54) **VERFAHREN ZUR HERSTELLUNG EINES FORMSEGMENTES EINER VULKANISATIONSFORM, FORMSEGMENT UND VULKANISATIONSFORM**
METHOD FOR PRODUCING A MOULD SEGMENT OF A VULCANIZING MOULD, MOULD SEGMENT, AND VULCANIZING MOULD
PROCÉDÉ DE FABRICATION D'UN SEGMENT DE MOULE D'UN MOULE DE VULCANISATION, SEGMENT DE MOULE ET MOULE DE VULCANISATION

(30) Priorität: 11.02.2020 DE 102020201682
(43) Veröffentlichungstag der Anmeldung: 21.12.2022
(73) Patentinhaber: Continental Reifen Deutschland GmbH, 30175 Hannover (DE)
(72) Erfinder: DZICK, Jürgen, 30165 Hannover (DE); HOPPE, Nicholas, 30165 Hannover (DE); VOELKER, Bert, 30165 Hannover (DE)
(74) Vertreter: Continental Corporation
(86) Internationale Anmeldenummer: PCT/EP2020/084446
(87) Internationale Veröffentlichungsnummer: WO 2021/160314

(56) Entgegenhaltungen:
- DE-A1- 102018 204 024
- US-A1- 2015 165 706
- US-A1- 2017 216 922

## Beschreibung

Die Erfindung betrifft ein Verfahren zur Herstellung eines Formsegmentes einer Vulkanisationsform für einen Fahrzeugluftreifen zum Ausformen der Profilierung des Laufstreifens, mit einem metallischen Basisteil mit einer Formseite mit Rippen, welche Profilblöcke umlaufende oder begrenzende Rillen ausformen. Die Erfindung betrifft ferner ein Formsegment einer Vulkanisationsform für einen Fahrzeugluftreifen zum Ausformen der Profilierung des Laufstreifens des Fahrzeugluftreifens, mit einem metallischen Basisteil und mit Rippen zum Ausformen von Rillen, welche Profilblöcke umlaufen oder begrenzen. Des Weiteren betrifft die Erfindung eine Vulkanisationsform aus Formsegmenten.

Die Vulkanisation von Fahrzeugluftreifen erfolgt in Heizpressen, in welchen ein Reifenrohling in eine Vulkanisationsform eingesetzt und unter Einwirkung von Druck und Temperatur vulkanisiert wird. Der Laufstreifen des Reifens wird dabei mittels eines aus mehreren Formsegmenten bestehenden Formsegmentringes geformt und geheizt, wobei auch das Laufstreifenprofil ausgeformt wird, da die Formsegmente an ihren dem Formenhohlraum zugewandten Formseiten mit Formelementen, wie Rippen und Lamellen, versehen sind. Traditionell werden Formsegmentringe durch Gussprozesse mit anschließender spanender Bearbeitung oder durch ausschließlich spanende Bearbeitung aus Stahl- oder Aluminiumlegierungen hergestellt.

Darüber hinaus ist es bekannt, jene Teile von Formsegmenten, welche die Profilierung im Laufstreifen ausformt, mittels eines additiven Herstellungsverfahrens, insbesondere durch SLM (selektives Laserschmelzen) herzustellen und an einem traditionell gefertigten weiteren Formsegmentbasisteil zu befestigen. Ein derart hergestelltes Formsegment ist beispielsweise aus der US 2016/039160 A1 bekannt.

Bekannt ist ferner, einzelne Formelemente, beispielsweise Lamellen, welche Einschnitte im Laufstreifen ausformen, oder Rippen, die Rillen im Laufstreifen ausformen, durch additive Fertigungsverfahren herzustellen. Aus der DE 10 2012 102 322 A1 ist ein Verfahren zur Herstellung einer Vulkanisationsform für Fahrzeugluftreifen bekannt, bei welchem die Lamellen mittels SLM hergestellt werden, während Segmentbasisteile durch ein Gießverfahren oder ein spanabhebendes Verfahren hergestellt werden und die Lamellen nachträglich eingebracht werden. Aus der EP 2 987 630 A1 ist es ferner bekannt, zumindest einen Formsegmentbasisteil mitsamt den Negativ-Profilelementen durch SLM herzustellen.

Aus der US 2015/0165706 A1 ist ein Verfahren bekannt, ein Formsegment einer Vulkanisierform für Reifen aus einem Formträger und einem separaten Profilteil, einem Formeinsatz, herzustellen. Hierbei kann der Formeinsatz mit einem additiven Verfahren hergestellt werden.

Bei den bekannten Verfahren zur Herstellung von Formsegmenten, bei welchen das komplette Formsegment nach einem additiven Verfahren hergestellt wird oder welchen ein Segmentteil, welcher beispielsweise aus Stahl, gefertigt ist, verwendet wird und welcher mit einem zweiten Segmentteil verbunden wird, der nach einem additiven Verfahren mitsamt den formgebenden Elemente, wie Rippen oder Lamellen aufgebaut ist, sind großvolumige Teile mittels des additiven Verfahrens aufzubauen. Die Herstellung ist somit zeitaufwendig und erfordert große Anlagen. Dabei werden Multi-Laser-Anlagen eingesetzt, die an einem Bauteil parallel arbeiten und exakt aufeinander angestimmt sein müssen, um einen qualitativ zufriedenstellenden Bauteil zu erhalten. Der nachträglich erforderliche Fräsaufwand, um ein einwandfreies Formsegment zur Verfügung zu haben, ist erheblich. Darüber hinaus neigen gemäß einem additiven Verfahren hergestellte großvolumige Bauteile infolge auftretender Eigenspannungen zum Verziehen, was spezielle Fertigungsverfahren erforderlich macht, beispielsweise das Sintern einer Gitterstruktur im Inneren des Bauteiles. Von besonderem Vorteil ist bei durch ein additives Verfahren wie selektives Laserschmelzen hergestellten Formsegmentteilen die Möglichkeit, komplex gestaltete Formteile, insbesondere Formteile mit einer hohen Anzahl von Lamellen, herzustellen. Solche Formteile sind daher für Vulkanisationsformen zum Vulkanisieren von Winterreifen und Nordic-Reifen von großem Interesse.

Der Erfindung liegt die Aufgabe zugrunde, auf eine neuartige und innovative Weise hybride Formsegmente - Formsegmente mit Bestandteilen, die nicht additiv gefertigt werden, in Kombination mit Bestandteilen, die additiv gefertigt werden - zur Verfügung zu stellen, welche obige Nachteile nicht aufweisen, wobei die Vorteile von additiven Verfahren voll erhalten bleiben sollen.

Gelöst wird die gestellte Aufgabe erfindungsgemäß mit einem Verfahren, bei welchem aus dem Basisteil ein Rippenskelett aus Rippen, deren Verlauf mit der Anordnung und dem Verlauf von Rillen ausformenden Rippen zumindest teilweise übereinstimmt, gefräst wird,
mittels eines additiven Verfahrens Einsätze mit randseitigen Rahmenteilen aufgebaut werden,
wobei die Einsätze in das Rippenskelett eingesetzt werden und dabei die Rahmenteile die Rippen des Rippenskelettes zu den die Rillen ausformenden Rippen komplettieren.

Die gestellte Aufgabe wird ferner mit einem Formsegment gelöst, bei welchem der Basisteil ein ausgefrästes Rippenskelett aus Rippen, deren Anordnung und deren Verlauf mit der Anordnung und dem Verlauf von Rillen ausformenden Rippen zumindest teilweise übereinstimmt, aufweist, in welches Rippenskelett nach einem additiven Verfahren hergestellte Einsätze mit randseitigen Rahmenteilen eingesetzt sind, welche die Rippen des Rippenskelettes zu Rillen ausformenden Rippen komplettieren.

Bei der Erfindung sind somit nach einem additiven Verfahren jene Elemente bzw. Bestandteile des formgebenden Teils der Formsegmente gefertigt, die eine besonders präzise Ausgestaltung erfordern. Die Einsätze sind kleine Bauteile, die sich kostengünstig ohne Verzug und Eigenspannungen in kleinen Anlagen, jeder Einsatz mit einem Laser, drucken lassen. Es entfallen daher die Schwierigkeiten, die mit dem Einsatz von Multi-Lasern einhergehen. Der Basisteil ist insbesondere ein aus einer für Formsegmente üblichen Stahl- oder Aluminiumlegierung vorgefertigter Teil, an welchem durch Fräsen das Rippenskelett erstellt wird, wobei der gefräste Basisteil eine hohe Maßhaltigkeit aufweist, da sich das Rippenskelett besonders präzise ausfräsen lässt. Das Rippenskelett ist vor allem auch deswegen besonders vorteilhaft, da es gestattet, die Einsätze mit einem geringen additiven Materialanteil aufzubauen, das Rippenskelett enthält ja schon einen Teil der vorgesehenen Rippen. Des Weiteren kann das Material des Basisteils mit dem Material, aus welcher das Metallpulver zum Aufbauen der Einsätze besteht, übereinstimmen, sodass die Bestandteile des Formsegmentes die gleiche Materialausdehnung besitzen. Der Druckaufwand zum Herstellen der Einsätze ist wesentlich geringer als zum Drucken von großvolumigen Formsegmentteile nach dem Stand der Technik, erfordert daher geringeren Zeitaufwand und geringeren Materialaufwand, wodurch die Kosten deutlich geringer sind. Die Erfindung stellt zudem ein modulares Konzept für Formsegmente von Reifenvulkanisationsformen zur Verfügung, da die Einsätze ausgetauscht werden können, und kein Austausch von großen Bestandteilen der Formsegmente oder überhaupt der Formsegmente selbst erforderlich ist, wenn etwa unterschiedliche Rippenausführungen oder oberflächliche Strukturierungen im Rahmen der Entwicklung von Laufstreifen mit vulkanisierten Reifen an Fahrzeugen im Einsatz getestet werden sollen.

Besonders vorteilhaft ist das Verfahren, wenn die Einsätze mitsamt Lamellen und/oder Mikrolamellen additiv aufgebaut werden. Es können besonders komplex gestaltete Lamellen sowie Mikrolamellen besonders exakt und nahezu mit beliebig geringen Abständen gedruckt werden. Das Verfahren ist daher vor allem zur Herstellung von Formsegmenten für die Profilierung von Winter- oder Nordic-Reifen besonders vorteilhaft.

Besonders formstabil sind Einsätze, welche vorzugsweise mitsamt Innenschichten auf einer Bauplatte additiv aufgebaut werden, aus der Bauplatte mitsamt dem Bauplattenteil, auf welchem sie aufgebaut sind, herausgeschnitten werden, sodass die Bauplattenteile Bodenplatten der Einsätze mitbilden oder bilden. Die Bauplattenteile sind somit Bestandteile der Einsätze und bilden, wenn auch Innenschichten additiv aufgebaut werden, gemeinsam mit diesen Bodenplatten der Einsätze. Die Innenschichten bilden die Formflächen, welche die Positivflächen des Laufstreifens des Reifens ausbilden.

Bei einer alternativen Ausführung werden die Einsätze mitsamt Innenschichten auf einer Bauplatte additiv aufgebaut, wobei anschließend die Einsätze von der Bauplatte abgetrennt werden, sodass die Innenschichten Bodenplatten der Einsätze bilden. Die Innenschichten stellen gemeinsam mit den vorgesehenen Rahmenteilen die Stabilität der Einsätze für deren Handhabung beim Einbau in den und bei einem gegebenenfalls vorzunehmenden Ausbau aus dem Basisteil sicher.

Bei einer weiteren Alternative werden die Einsätze, vorzugsweise mitsamt Innenschichten, auf an die Einsätze angepasste, insbesondere aus einer Bauplatte zurecht geschnittene Bauplattenteilen additiv aufgebaut. Auch bei dieser Variante werden formstabile Einsätze erhalten.

Die Innenschichten und können gemäß einer bevorzugten Ausgestaltung mit zumindest einer oberflächlichen Struktur additiv aufgebaut werden. Dabei können die Innenschichten von Einsätzen unterschiedliche Strukturen erhalten, sodass diese Innenschichten aus unterschiedlich strukturierten Teilbereichen bestehen, und/oder es können Einsätze aufgebaut werden, deren Innenschichten Strukturen aufweisen, die sich von den Strukturen der Innenschichten anderer Einsätze unterscheiden.

Das Formsegment weist daher bevorzugt eingesetzte Einsätze mit Bodenplatten auf, die jeweils aus einer additiv aufgebauten Innenschicht oder aus einer additiv aufgebauten Innenschicht und einem Teil jener Bauplatte, auf welcher die Einsätze aufgebaut wurden, bestehen. Der Laufstreifen des zu vulkanisierenden Reifens erhält die vorgesehene gekrümmte Außenkontur durch die Innenschichten, welche gekrümmte Außenflächen aufweisen, welche die Formflächen zur Ausbildung der Positivflächen der Profilelemente des Laufstreifens sind.

Bei einer weiteren bevorzugten Ausführung werden Einsätze additiv aufgebaut, welche durch zusätzliche Rippen unterteilt oder gegliedert sind. Der Aufbau derartiger Einsätze bietet sich beispielsweise dann an, wenn Rippen vorgesehen sind, die im Laufstreifen Sacknuten ausbilden sollen. Diese Ausführung ist auch dann von Vorteil, wenn insbesondere relativ schmale Rippen vorgesehen sind, die beispielsweise Rillen ausbilden, welche Profilblöcke in kleinere Profilblockelemente unterteilen. Derartige Einsätze können auch solche Einsätze sein, die an Formsegmentgrenzen eingesetzt werden und beispielsweise zusätzlich einen Teil eines zweiten, durch die Formsegmentgrenze "geteilten" Einsatzes aufweisen.

Das Formsegment ist daher bevorzugt mit Einsätzen versehen, welche zusätzlich durch Rippen unterteilt bzw. gegliedert sind und gegebenenfalls mit Mikrolamellen zur Ausbildung von entsprechend schmalen und seichten Einschnitten im Laufstreifen des zu vulkanisierenden Reifens versehen sind.

Bei einer weiteren bevorzugten Ausführung werden Einsätze additiv aufgebaut, welche Abschnitte eines Schulterdekors oder von Schulterdekorrippen aufweisen. Diese Ausführung wird insbesondere dann in Betracht gezogen, wenn relativ komplex gestaltete Dekorelemente und dgl. realisiert werden sollen.

Bei einer alternativen Ausführung des Verfahrens werden am Basisteil Schulterdekorrippen mit oberflächlichen Dekorelementen ausgefräst. Bekannterweise formen Schulterdekorrippen jene Bereiche des Laufstreifens des zu vulkanisierenden Reifens aus, welche bereits außerhalb des bodenberührenden Teils des Laufstreifens sind und der Schulterkrümmung des Reifens folgen. Ja nach Ausgestaltung lassen sich die Schulterdekorrippen durch Fräsen auf präzise und kostengünstige Weise erstellen. Einsätze, die, wie erwähnt, mit Abschnitten von Schulterdekorrippen additiv aufgebaut werden, erfordern ggf. einen größeren Aufwand und höhere Herstellkosten. Das Formsegment weist daher entweder einen Basisteil mit gefrästen Schulterdekorrippen mit oberflächlich gefrästen Dekorelementen oder Einsätze auf, welche Abschnitte eines Schulterdekors oder von Schulterdekorrippen besitzen.

An den Positionierpositionen der Einsätze am Basisteil werden zwischen den Rippen des Rippenskelettes bevorzugt Vertiefungen mit ebenen Bodenflächen ausgefräst, deren Orientierung am Basisteil an die vorgesehene Außenkontur des Laufstreifens des zu vulkanisierenden Reifens angepasst ist, wobei die Vertiefungen auch in einer an die Dicke der Bodenplatten der Einsätze angepassten Tiefe gefräst werden.

Das Formsegment weist daher bevorzugt einen entsprechend gestalteten Basisteil auf, welcher zwischen den Rippen des Rippenskelettes und zwischen den Rippen und den Schulterdekorrippen Vertiefungen mit ebenen Bodenflächen besitzt.

Um die erforderliche Formentlüftung beim Einformen des zu vulkanisierenden Reifens in die Vulkanisationsform zu gewährleisten, werden bei einer bevorzugten Ausführung im Basisteil bis in die Bodenflächen der Vertiefungen reichende Entlüftungslöcher erstellt und es wird die Bauplatte mit Entlüftungslöchern versehen, deren Positionen mit den Positionen der Entlüftungslöcher im Basisteil korreliert. Dabei können in der Bauplatte bereits Gewindebohrungen erstellt werden, falls die Einsätze an der Basisplatte angeschraubt werden sollen. Somit weist der Basisteil des Formsegments bis in die Bodenflächen der Vertiefungen reichende Entlüftungslöcher auf, und es sind die Bodenplatten der Einsätze bevorzugt von Entlüftungslöchern durchsetzt, deren Positionen mit den Positionen der Entlüftungslöcher im Basisteil korrelieren.

Bevorzugt werden daher auch die Innenschichten der Einsätze unter Freilassung von Löchern aufgebaut, deren Positionen mit den Positionen der Entlüftungslöcher in der Bauplatte übereinstimmen.

Es vereinfacht die Fräsarbeiten am Basisteil, wenn diese gemäß einer bevorzugten Ausführung derart durchgeführt werden, dass die Vertiefungen im Basisteil mit gerundeten Eckbereichen gefräst werden. Die gemäß dem additiven Verfahren aufzubauende Einsätze können dann auf besonders exakte Weise mit entsprechend gerundeten Außeneckbereichen und auch mit scharfkantigen Innenecken additiv aufgebaut werden. Dementsprechend ist auch die bevorzugte Ausgestaltung des Basisteils mit Vertiefungen mit gerundeten Eckbereichen, wobei die Einsätze entsprechend gerundete Außeneckbereiche und falls erwünscht scharfkantige Innenecken aufweisen.

Besonders vorteilhaft ist es, wenn der Basisteil des Formsegmentes aus einer Stahl- oder einer Aluminiumlegierung besteht, da sich solche Materialien besonders gut fräsen lassen.

Die Erfindung betrifft ferner eine Vulkanisationsform für Fahrzeugluftreifen, welche einen Segmentring mit Formsegmenten nach einem oder mehreren der Ansprüche 14 bis 25 enthält.

Weitere Merkmale, Vorteile und Einzelheiten der Erfindung werden nun anhand der teilweise schematischen Zeichnung, die Ausführungsbeispiele darstellt, näher beschrieben. Dabei zeigen
Fig. 1 eine Ansicht eines Formsegmentteiles einer Reifenvulkanisationsform aus einem Basisteil mitsamt eingesetzten Einsätzen,
Fig. 2 eine Ansicht des zugehörigen Basisteils,
Fig. 3 eine Ansicht der zugehörigen Einsätze,
Fig. 4 eine schematische Ansicht einer Bauplatte mit aufgebauten Einsätzen,
Fig. 5 eine schematische Ansicht von aus der Bauplatte ausgeschnittenen Einsätzen,
Fig. 6 eine schematische Ansicht eines einzelnen Einsatzes und
Fig. 7 eine Ansicht eines Details eines in einen Basisteil eingesetzten Einsatzes.

In der nachfolgenden Beschreibung wird unter "radialer Richtung" die Richtung einer Senkrechten auf die die Laufstreifenaußenfläche ausformende Formfläche verstanden. Unter "axialer Richtung" wird eine Richtung parallel zur Rotationsachse des zu vulkanisierenden Reifens verstanden.

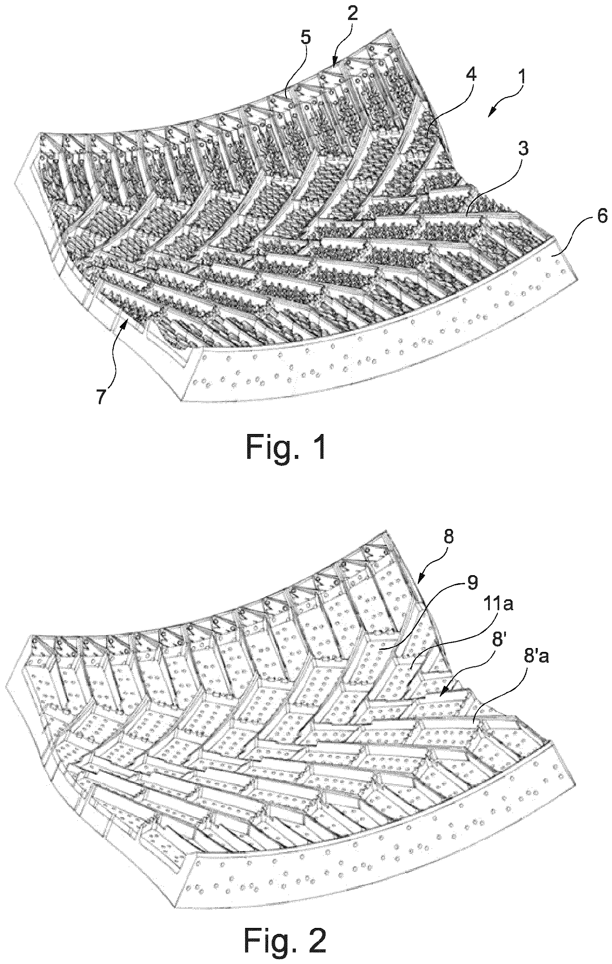

Fig. 1 zeigt eine Ansicht eines Formsegmentteiles 1 eines Formsegmentes eines Segmentringes einer Reifenvulkanisationsform, wobei insbesondere die Innenseite - die dem Formenhohlraum zugewandte Seite - zu sehen ist. Ein üblicher Segmentring setzt sich beispielsweise aus sieben bis vierzehn Formsegmenten zusammen, welche jeweils der Innenseite gegenüber einen Formsegmentrücken aufweisen, mittels welchem die Formsegmente in an sich bekannter Weise an einem Segmentschuh der Reifenvulkanisationsform angeordnet werden. An seiner Innenseite weist der Formsegmentteil 1 Formelemente auf, welche gemäß der vorgesehenen Profilierung im Laufstreifen des zu vulkanisierenden Reifens Profilnegativelemente, bei der gezeigten Ausführung Rippen 3 und Lamellen 4, sind.

Die Rückseiten der Formsegmentteile 1 sind beispielsweise einfache zylindrischen Flächen, sodass die Formsegmentteile 1 mittels entsprechend gestalteter Adapter am Segmentschuh der Vulkanisationsform angebracht werden. Es werden insbesondere Adapter verwendet, die an den Rückseiten der Formsegmentteile 1 angeschraubt werden oder über Nut/Feder- oder Schwalbenschwanzverbindungen oder anderen form- oder stoffschlüssige Verbindungen mit den Formsegmentteile 1 verbunden werden. Bei einer alternativen Ausführung sind die Formsegmentteile 1 selbst bereits als Interface zum Container der Vulkanisationsform ausgestaltet.

Die Lamellen 7 formen im Laufstreifen des zu vulkanisierenden Reifens Einschnitte mit einer Breite (an der Laufstreifenperipherie bei neuem Reifen) in der Größenordnung von 0,4 mm bis 1,0 mm, die Rippen 3 formen im Laufstreifen des zu vulkanisierenden Reifens Rillen, deren Breite (an der Laufstreifenperipherie bei neuem Reifen) größer 1,0 mm und insbesondere bis zu 6,0 mm beträgt. Zusätzlich können Lamellen vorgesehen sein, die sogenannte Mikrolamellen sind, die üblicherweise schmale und seichte Einschnitte mit einer Breite und Tiefe von etwa 0,2 mm bis 0,3 mm im Laufstreifen ausformen. Bei der in Fig. 1 gezeigten Ausführung bilden die Rippen 3 und Lamellen 4 eine typische Winterreifenprofilierung im Laufstreifen des zu vulkanisierenden Reifens aus. Im Beispiel ist ferner eine Vielzahl von V-förmig und parallel zueinander sowie über die Breite der Innenseite jedes Formsegmentteiles 1 verlaufenden Rippen 3 vorgesehen, ferner sind weitere schräg zur Umfangsrichtung des Formsegmentes 1 verlaufende, die V-förmig verlaufenden Rippen 3 unterteilende weiteren Rippen 3 vorhanden. Schulterseitig erfolgt eine zusätzliche Gliederung durch Rippen 3, die mittig zwischen und parallel zu den schulterseitig verlaufenden Abschnitten der V-förmig verlaufenden Rippen 3 vorhanden sind. Schulterdekorrippen 2 bilden die seitlichen Ränder des Formsegmentteiles 1. In sämtlichen von den Rippen 3 und den Schulterdekorrippen 2 umlaufenden Flächenelementen ist jeweils eine Anzahl von Lamellen 4 in Wellenform vorhanden. An der Oberseite - der dem Formenhohlraum zugewandten Seite des Formsegmentteiles 1 - der Schulterdekorrippen 2 befinden sich flache Strukturen in der Gestalt von Dekorelementen 5 zur Ausbildung von Schulterdekoren des Reifens. Durch die zwischen den Schulterdekorrippen 2 V-förmig verlaufende Rippen 3 ist das gebildete Profilnegativ in zueinander V-förmig verlaufende Pitches - in jeder Formsegmentteilhälfte sich in Umfangsrichtung gleichartig wiederholende Negativ-Abschnitte - gegliedert.

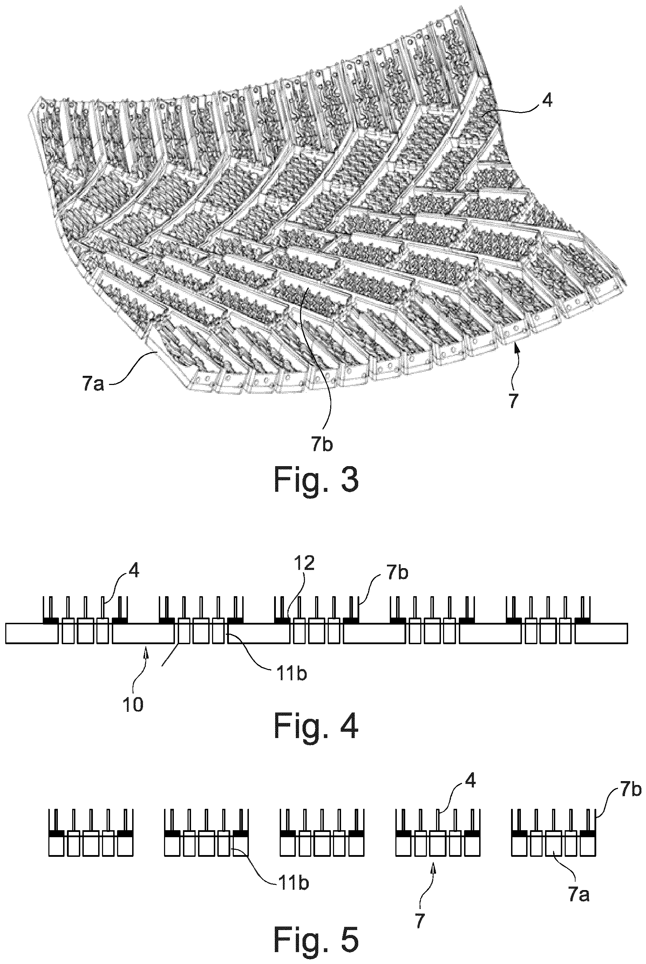

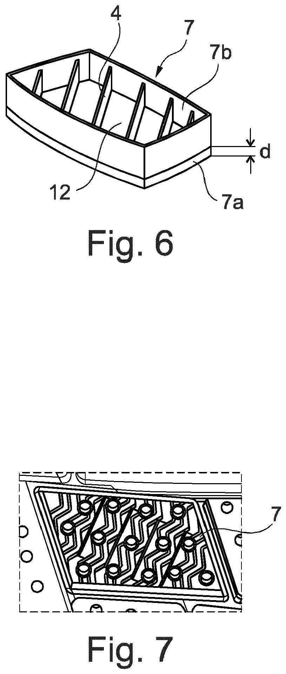

Wie Fig. 2 und Fig. 3 zeigen ist der Formsegmentteil 1 aus einem Basisteil 6 aus einem metallischen Material, insbesondere aus einer Stahl- oder einer Aluminiumlegierung, und ferner aus Vielzahl von in den Basisteil 6 eingesetzten Einsätzen 7 zusammengesetzt. Die Einsätze 7, auf deren Herstellung weiter unten näher eingegangen wird, weisen jeweils eine Bodenplatte 7a (Fig. 6) auf, die eine ebene Unterseite und eine gemäß der Außenfläche der im Laufstreifen des zu vulkanisierenden Reifens auszuformenden Blöcken geformte Innenseite besitzt. Die Bodenplatten 7a weisen eine Dicke d auf, die randseitig geringfügig größer ist als in der Mitte. Die Innenseiten der Bodenplatten 7a bilden daher die Formflächen zur Ausbildung der mit dem Untergrund in Kontakt kommenden Außenflächen des Laufstreifens.

Die Ausgestaltung des Basisteils 6 wird nun anhand der Fig. 2 näher erläutert. Der Basisteil 6 ist ein gefräster Teil mit gefrästen Schulterdekorrippen 2 mit gefrästen Dekorelementen 5 an den seitlichen Rändern und einem gefrästen Rippenskelett 8. Das Rippenskelett 8 besteht aus Rippen 8`, deren Anordnung und deren Verlauf mit der Anordnung und dem Verlauf der Rippen 6 übereinstimmt, wobei jedoch die Rippen 8' gegenüber den Rippen 6 schmäler sind, es fehlen an beiden Rippenflanken 8'a Flankenabschnitte der Rippen 6. Diese Flankenabschnitte werden, wie noch beschrieben wird, durch Rahmenteile 7b der Einsätze 7 ergänzt. Die Rippenflanken 8'a sind, wie es Fig. 2 zeigt, gemäß einer bevorzugten Ausführung ebene Flächen, die in radialer Richtung orientiert sind. Grundsätzlich werden die Rippenflanken 8'a derart gefräst, dass ein bündiges Einsetzen der erwähnten Einsätze 7 von oben möglich ist, die Rippenflanken 8'a können daher beispielsweise gegenüber der radialen Richtung geringfügig geneigt sein.

Das Niveau der Spitzen der Rippen 8' entspricht jenem der Rippen 3. Die Rippen 8' weisen jedoch eine größere Höhe auf als die Rippen 3, da die Rippen 8` des Rippenskelettes 8, schulterseitig gemeinsam mit den Schulterdekorrippen 2, tiefer ausgefräste Vertiefungen mit ebenen Bodenflächen 9 umschließen. Die Tiefe der Vertiefungen ist an die größte Dicke d der Bodenplatten 7a der Einsätze 7 derart angepasst, dass sich bei eingesetzten Einsätzen 7 die die Formfläche bildenden Innenseiten der Einsätze 7 am vorgesehenen Formflächenniveau befinden.

Die Orientierung der Bodenflächen 9 ist an die erwünschte Rundung bzw. Kontur der Außenseite des Laufstreifens des zu vulkanisierenden Reifens angepasst, vorzugsweise indem jede Bodenfläche 9 im rechten Winkel zu einer, bezogen auf die erwähnte Außenkontur, in radialer Richtung orientierten Geraden durch seinen geometrischen Mittelpunkt ausgerichtet ist. Im mittleren Bereich des Basisteils 6 befinden sich daher die Bodenflächen 9, die nahezu in axialer Richtung orientiert sind.

Die Dekorelemente 5 auf den Schulterdekorrippen 2 weisen beispielsweise und wie in Fig. 1 und Fig. 2 gezeigt flache und schmale Erhebungen auf, die in Fortsetzung der Rippen 8` des Rippenskelettes 8 verlaufen.

Zur Entlüftung wird der Basisteil 6 zwischen den Bodenflächen 9 und seiner Rückseite durchbohrt, wobei pro Bodenfläche 9 entweder jeweils eine größere Anzahl von Löchern 11a erstellt wird (Fig. 2) oder es werden lediglich ein oder zwei Löcher 11a zur Entlüftung erstellt und es wird auf der jeweiligen Bodenfläche 9 eine Art Kanalnetz aus flachen Vertiefungen gefräst, die mit dem Loch 11a bzw. den Löchern 11a verbunden ist bzw. sind. Die Löcher 11a werden dabei derart angeordnet, dass ihre Positionen nicht mit den Positionen der Lamellen 4 in den Einsätzen 7 zusammenfallen.

Die Einsätze 7 werden durch ein additives Verfahren, insbesondere durch selektives Laserschmelzen, in einer größeren Anzahl auf einer Bauplatte 10 aufgebaut. Die Bauplatte 10 ist eine ebene Platte, wobei bei einer bevorzugten Ausführung die Stärke der Platte die erforderliche Tiefe der erwähnten Vertiefungen im Basisteil 6 mitbestimmt. Die Bauplatte 10 wird zuerst entsprechend der Anordnung der Löcher 11a im Basisteil 6 ebenfalls mit Löchern 11b (Fig. 4 und Fig. 5) versehen. Die Ausbildung von Vertiefungen in Form von Kanalnetzen, welche mit den ggf. vorgesehenen gefrästen Kanalnetzen auf den Bodenflächen 9 übereinstimmen, kann erfolgen, ist aber nicht zwingend erforderlich, da die gefrästen Kanalnetze auf den Bodenflächen 9 üblicherweise bereits für eine gute Entlüftung sorgen.

Die Bauplatte 10 wird in einem 3D-Drucker entsprechend ausgerichtet und positioniert, die erstellten Löcher 11b werden bündig mit der Oberseite der Bauplatte 10 mit Metallpulver oder dgl. verfüllt. Anschließend werden die einzelnen Einsätze 7 in ihren vorgesehenen Gestaltungen Schicht für Schicht mitsamt den vorgesehenen Lamellen, etwaigen Mikrolamellen, sonstigen Oberflächenstrukturen, gegebenenfalls Schriftzeichen, Treadwear- Indikatoren und Sonstigem aufgebaut. Dabei werden an den Positionen der Löcher 11b in der Bauplatte 10 Entlüftungslöcher freigelassen. Bevorzugt wird auf der Oberseite der Bauplatte eine dünne Innenschicht 12 (Fig. 4) entsprechend der vorgesehenen Krümmung der Formfläche gekrümmt aufgebaut. Die Einsätze 7 werden ferner mit randseitigen Rahmenteilen 7b (Fig. 6) aufgebaut, welche derart gestaltet sind, dass beim Einsetzen der Einsätze 7 an ihren vorgesehenen Positionen am Basisteil 6 die Rippen 8` des Rippenskelettes 8 zu kompletten Rippen 3 ergänzt werden. Bei Einsätzen 7, die schulterseitig zu positionieren sind, sind dabei Rahmenteile 7b nur an jenen drei Seiten ausgebildet, die an Rippen 8' angrenzen. Je nach der tatsächlichen Gestaltung des Laufstreifenprofils mit Rippen können zugehörige, die Profilierung ausprägende Einsätze auch lediglich an zwei Seiten Rahmenteile aufweisen und/oder derart gestaltet sein, dass sie größere Profilblöcke, mehr als einen Profilblock oder sonstige blockartige Strukturen im Laufstreifen ausformen.

Bei einer bevorzugten Ausführung werden die aufgebauten Einsätze 7 mitsamt dem Bauplattenteil, auf welchem sie unmittelbar aufgebaut sind, aus der Bauplatte 10 herausgeschnitten, beispielsweise mittels Laserstrahl, durch Wasserstrahl oder mechanisch. Die Passflächen werden gegebenenfalls nachbearbeitet. Zu diesem Zeitpunkt können, falls vorgesehen, Entlüftungsventile in den Löchern 11b, welche die Bauplatte 10 und die Innenschicht 12 durchsetzen, eingesetzt werden. Die Bodenplatten 7a der solcher Einsätze 7 bestehen aus dem Bauplattenteilteil und der Innenschicht 12. Bei einer alternativen Ausführung werden die Einsätze 7 entlang der Oberseite der Bauplatte 19 abgetrennt, beispielsweise abgeschnitten, sodass die Bodenplatten 7a von den Innenschichten 12 gebildet sind. Die Frästiefe der Vertiefungen im Basisteil 6 richtet sich nach der vorgesehenen Ausführung.

Anschließend erfolgt das Positionieren und Einsetzen der Einsätze 7 an ihren Positionen am Basisteil 6. Dabei erfolgt eine feste Verbindung der Einsätze 7 zum Basisteil 6, vorzugsweise durch Einschrumpfen, indem der Basisteil 6 vor dem Einsetzen erwärmt wird. Die Einsätze 7 können ferner durch Verschrauben oder Verschweißen mit dem Basisteil 6 verbunden werden. Dabei können bei einer Ausführung mit Bauplattenteilen als Bestandteile der Bodenplatten 7b der Einsätze 7 Schraublöcher mit Innengwinden in der Bauplatte und dem Basisteil erstellt werden, sodass ein leichter Austausch von Einsätzen 7 ermöglicht ist.

Das Ausfräsen der Vertiefungen im Basisteil 6 mit scharfkantigen Ecken ist aufwendig. Bevorzugt werden daher die Eckbereiche der Vertiefungen gerundet gefräst. Die Eckbereiche zwischen den Rahmenteilen 7b an den Einsätzen 7 werden im Zuge des additiven Aufbaus außenseitig entsprechend den gerundeten Eckbereichen der Vertiefungen gerundet aufgebaut, die Innenecken zwischen den Rahmenteilen 7b werden scharfkantig aufgebaut, wie es in Fig. 7 gezeigt ist.

Die Formsegmentteilung erfolgt insbesondere derart, dass komplette Einsätze eingesetzt werden können. Alternativ erfolgt ein "Teilung" von Einsätzen in den Daten zum additiven Aufbau, sodass Einsätze in zwei Teilen additiv aufgebaut werden.

Es können ferner Einsätze 7 selbst zusätzlich Rippen aufweisen, die beispielsweise diese Einsätze 7 unterteilen bzw. in Einsatzelemente gliedern. Das Rippenskelett 8 kann in ihrem Verlauf unterbrochene Rippen aufweisen, die Rahmenteilen der Einsätze ergänzt werden.

Der additive Aufbau der Einsätze erfolgt vollautomatisch softwaregesteuert, ebenso die Fräsarbeiten an den Basisteilen 6.

### Bezugsziffernliste

- 1: Formsegment
- 2: Schulterdekorrippe
- 3: Rippe
- 4: Lamelle
- 5: Dekorelemente
- 6: Basisteil
- 7: Einsatz
- 7a: Bodenplatte
- 7b: Rahmenteil
- 8: Rippenskelett
- 8': Rippe
- 8'a: Rippenflanke
- 9: Bodenfläche
- 10: Bauplatte
- 11a, 11b: Loch
- 12: Innenschicht
- d: Dicke

## Patentansprüche

1. Verfahren zur Herstellung eines Formsegmentes einer Vulkanisationsform für einen Fahrzeugluftreifen zum Ausformen der Profilierung eines Laufstreifens, mit einem metallischen Basisteil (6) mit einer Formseite mit Rippen (3), welche Profilelemente umlaufende oder begrenzende Rillen ausformen,
**dadurch gekennzeichnet,**
**dass** aus dem Basisteil (6) ein Rippenskelett (8) aus Rippen (8`), deren Anordnung und deren Verlauf mit der Anordnung und dem Verlauf von Rillen ausformenden Rippen (3) zumindest teilweise übereinstimmt, gefräst wird,
mittels eines additiven Verfahrens Einsätze (7) mit randseitigen Rahmenteilen (7b) aufgebaut werden,
wobei die Einsätze (7) in das Rippenskelett (8) eingesetzt werden und dabei die Rahmenteile (7b) die Rippen (8') des Rippenskelettes (8) zu den die Rillen ausformenden Rippen (3) komplettieren.

2. Verfahren nach Anspruch 1, **dadurch gekennzeichnet, dass** die Einsätze (7) mitsamt Lamellen (4) und/oder Mikrolamellen additiv aufgebaut werden.

3. Verfahren nach Anspruch 1 oder 2, **dadurch gekennzeichnet, dass** die Einsätze (7) vorzugsweise mitsamt Innenschichten (12) auf einer Bauplatte (10) additiv aufgebaut werden, aus der Bauplatte (10) mitsamt dem Bauplattenteil, auf welchem sie aufgebaut sind, herausgeschnitten werden, sodass die Bauplattenteile Bodenplatten (7a) der Einsätze (7) mitbilden oder bilden.

4. Verfahren nach einem oder mehreren der Ansprüche 1 bis 3, **dadurch gekennzeichnet, dass** die Einsätze (7) mitsamt Innenschichten (12) auf einer Bauplatte (10) additiv aufgebaut werden, wobei anschließend die Einsätze (7) von der Bauplatte (10) abgetrennt werden, sodass die Innenschichten (12) Bodenplatten (7a) der Einsätze (7) bilden.

5. Verfahren nach einem oder mehreren der Ansprüche 1 bis 3, **dadurch gekennzeichnet, dass** die Einsätze (7) vorzugsweise mitsamt Innenschichten (12) auf an die Einsätze (7) angepasste, insbesondere aus einer Bauplatte (10) zurecht geschnittenen Bauplattenteilen additiv aufgebaut werden.

6. Verfahren nach einem oder mehreren der Ansprüche 1 bis 5, **dadurch gekennzeichnet, dass** Innenschichten (12) von Einsätzen (7) mit zumindest einer oberflächlichen Struktur additiv aufgebaut werden.

7. Verfahren nach einem oder mehreren der Ansprüche 1 bis 6, **dadurch gekennzeichnet, dass** Einsätze (7) additiv aufgebaut werden, welche durch zusätzliche Rippen unterteilt oder gegliedert sind.

8. Verfahren nach einem oder mehreren der Ansprüche 1 bis 7, **dadurch gekennzeichnet, dass** Einsätze (7) additiv aufgebaut werden, welche Abschnitte eines Schulterdekors oder von Schulterdekorrippen (2) aufweisen.

9. Verfahren nach einem oder mehreren der Ansprüche 1 bis 8, **dadurch gekennzeichnet, dass** am Basisteil (6) Schulterdekorrippen (2) mit oberflächlichen Dekorelementen (5) ausgefräst werden.

10. Verfahren nach einem oder mehreren der Ansprüche 1 bis 9, **dadurch gekennzeichnet, dass** zwischen den Rippen (8') des Rippenskelettes (8) Vertiefungen mit ebenen Bodenflächen (9) ausgefräst werden, deren Orientierung am Basisteil (6) an die vorgesehene Außenkontur des Laufstreifens des zu vulkanisierenden Reifens angepasst ist, wobei die Vertiefungen in einer an die Dicke der Bodenplatten (7a) der Einsätze (7) angepassten Tiefe gefräst werden.

11. Verfahren nach einem oder mehreren der Ansprüche 1 bis 10, **dadurch gekennzeichnet, dass** im Basisteil (6) bis in die Bodenflächen (9) der Vertiefungen reichende Entlüftungslöcher (11a) erstellt werden.

12. Verfahren nach einem oder mehreren der Ansprüche 1 bis 11, **dadurch gekennzeichnet, dass** die Bauplatte (10) mit Entlüftungslöchern (11b) und ggf. mit Gewindebohrungen versehen wird, deren Positionen mit den Positionen der Entlüftungslöcher (11a) im Basisteil (6) korreliert.

13. Verfahren nach einem oder mehreren der Ansprüche 1 bis 12, **dadurch gekennzeichnet, dass** die Innenschichten (12) der Einsätze (7) unter Freilassung von Löchern aufgebaut werden, deren Positionen mit den Positionen der Entlüftungslöcher (11b) in der Bauplatte (10) übereinstimmen.

14. Verfahren nach einem oder mehreren der Ansprüche 1 bis 13, **dadurch gekennzeichnet, dass** die Vertiefungen im Basisteil (6) mit gerundeten Eckbereichen gefräst werden, wobei die Einsätze (7) mit entsprechend gerundeten Außeneckbereichen und ggf. mit scharfkantigen Innenecken aufgebaut werden.

15. Formsegment einer Vulkanisationsform für einen Fahrzeugluftreifen zum Ausformen der Profilierung des Laufstreifens des Fahrzeugluftreifens, mit einem metallischen Basisteil (6) und mit Rippen (3) zum Ausformen von Rillen, welche Profilelemente umlaufen und/oder begrenzen, **dadurch gekennzeichnet,**
**dass** der Basisteil (6) ein ausgefrästes Rippenskelett (8) aus Rippen (8') aufweist, deren Anordnung und deren Verlauf mit der Anordnung und dem Verlauf von Rillen ausformenden Rippen (6) zumindest teilweise übereinstimmt, in welches Rippenskelett (8) nach einem additiven Verfahren hergestellte Einsätze (7) mit randseitigen Rahmenteilen (7b) eingesetzt sind, welche die Rippen (8') des Rippenskelettes (8) zu Rillen ausformenden Rippen (3) komplettieren.

16. Formsegment nach Anspruch 15, **dadurch gekennzeichnet, dass** es Einsätze (7) aufweist, welche zusätzlich durch Rippen unterteilt bzw. gegliedert sind.

17. Formsegment nach Anspruch 15 oder 16, **dadurch gekennzeichnet, dass** die Einsätze (7) Bodenplatten (7a) aufweisen, die jeweils aus einer additiv aufgebauten Innenschicht (12) oder aus einer additiv aufgebauten Innenschicht (12) und einem Teil jener Bauplatte, auf welcher die Einsätze (7) aufgebaut wurden, bestehen.

18. Formsegment nach einem oder mehreren der Ansprüche 15 bis 17, **dadurch gekennzeichnet, dass** es Einsätze (7) aufweist, welche mit Lamellen und /oder Mikrolamellen versehen sind.

19. Formsegment nach einem oder mehreren der Ansprüche 15 bis 18, **dadurch gekennzeichnet, dass** die Innenschichten (12) gekrümmte Außenflächen aufweisen, welche die Formflächen zur Ausbildung von Positivflächen der Profilelemente sind.

20. Formsegment nach einem oder mehreren der Ansprüche 15 bis 19, **dadurch gekennzeichnet, dass** es Einsätze (7) aufweist, welche Abschnitte eines Schulterdekors oder von Schulterdekorrippen (2) aufweisen.

21. Formsegment nach Anspruch 15, **dadurch gekennzeichnet, dass** der Basisteil (6) gefräste Schulterdekorrippen (2) mit oberflächlich gefrästen Dekorelementen (5) aufweist.

22. Formsegment nach einem oder mehreren der Ansprüche 15 bis 21, **dadurch gekennzeichnet, dass** das Rippenskelett (8) am Basisteil (6) zwischen seinen Rippen (8') und ggf. zwischen seinen Rippen (8') und den Schulterdekorrippen (2) Vertiefungen mit ebenen Bodenflächen (9) aufweist, deren Orientierung am Basisteil (6) an die vorgesehene Außenkontur des Laufstreifens des zu vulkanisierenden Reifens angepasst ist, wobei die Vertiefungen eine Tiefe aufweisen, die an die Dicke der Bodenplatten (7a) der Einsätze (7) angepasst ist.

23. Formsegment nach einem oder mehreren der Ansprüche 15 bis 22, **dadurch gekennzeichnet, dass** der Basisteil (6) bis in die Bodenflächen (9) der Vertiefungen reichende Entlüftungslöcher (11a) aufweist.

24. Formsegment nach einem oder mehreren der Ansprüche 15 bis 23, **dadurch gekennzeichnet, dass** die Bodenplatten (7a) der Einsätze (7) von Entlüftungslöchern (11b) durchsetzt sind, deren Positionen mit den Positionen der Entlüftungslöcher (11a) im Basisteil (6) korrelieren.

25. Formsegment nach einem oder mehreren der Ansprüche 15 bis 24, **dadurch gekennzeichnet, dass** die Vertiefungen im Basisteil (6) gerundeten Eckbereiche aufweisen, wobei die Einsätze (7) entsprechend gerundete Außeneckbereiche und ggf. scharfkantige Innenecken aufweisen.

26. Formsegment nach einem oder mehreren der Ansprüche 15 bis 25, **dadurch gekennzeichnet, dass** der Basisteil (6) aus einer Stahl- oder aus einer Aluminiumlegierung besteht.

27. Vulkanisationsform für Fahrzeugluftreifen, welche einen Segmentring mit Formsegmenten nach einem oder mehreren der Ansprüche 15 bis 26 enthält.

## Claims

1. Method for producing a mould segment of a vulcanizing mould for a pneumatic vehicle tyre for forming the profiling of a tread, having a metallic base part (6) with a mould side with ribs (3) which form channels encircling or delimiting profile elements,
**characterized**
**in that** a rib skeleton (8) consisting of ribs (8'), the arrangement and the profile of which at least partially corresponds to the arrangement and the profile of ribs (3) forming channels, is milled from the base part (6),
inserts (7) with peripheral frame parts (7b) are built up by means of an additive method,
the inserts (7) being inserted into the rib skeleton (8) and the frame parts (7b) completing the ribs (8') of the rib skeleton (8) to form the ribs (3) forming the channels.

2. Method according to Claim 1, **characterized in that** the inserts (7) together with lamellae (4) and/or micro-lamellae are built up additively.

3. Method according to Claim 1 or 2, **characterized in that** the inserts (7), preferably together with inner layers (12), are built up additively on a building plate (10), are cut out of the building plate (10) together with the building plate part, on which they are built up, such that the building plate parts partly form or form bottom plates (7a) of the inserts (7).

4. Method according to one or more of Claims 1 to 3, **characterized in that** the inserts (7) together with inner layers (12) are built up additively on a building plate (10), the inserts (7) then being separated from the building plate (10), such that the inner layers (12) form bottom plates (7a) of the inserts (7).

5. Method according to one or more of Claims 1 to 3, **characterized in that** the inserts (7), preferably together with inner layers (12), are built up additively on building plate parts which are adapted to the inserts (7), in particular are cut to size from a building plate (10).

6. Method according to one or more of Claims 1 to 5, **characterized in that** inner layers (12) of inserts (7) are built up additively with at least one surface structure.

7. Method according to one or more of Claims 1 to 6, **characterized in that** inserts (7) which are subdivided or divided by additional ribs are built up additively.

8. Method according to one or more of Claims 1 to 7, **characterized in that** inserts (7) which have sections of a shoulder decoration or of shoulder decoration ribs (2) are built up additively.

9. Method according to one or more of Claims 1 to 8, **characterized in that** shoulder decoration ribs (2) with surface decorative elements (5) are milled out on the base part (6).

10. Method according to one or more of Claims 1 to 9, **characterized in that** depressions with flat bottom surfaces (9) are milled out between the ribs (8') of the rib skeleton (8), the orientation of which depressions on the base part (6) is adapted to the intended outer contour of the tread of the tyre to be vulcanized, the depressions being milled to a depth adapted to the thickness of the bottom plates (7a) of the inserts (7).

11. Method according to one or more of Claims 1 to 10, **characterized in that** ventilation holes (11a) which reach into the bottom surfaces (9) of the depressions are made in the base part (6).

12. Method according to one or more of Claims 1 to 11, **characterized in that** the building plate (10) is provided with ventilation holes (11b) and optionally with threaded bores, the positions of which correlate with the positions of the ventilation holes (11a) in the base part (6).

13. Method according to one or more of Claims 1 to 12, **characterized in that** the inner layers (12) of the inserts (7) are built up leaving holes free, the positions of which correspond to the positions of the ventilation holes (11b) in the building plate (10).

14. Method according to one or more of Claims 1 to 13, **characterized in that** the depressions in the base part (6) are milled with rounded corner regions, the inserts (7) being built up with correspondingly rounded outer corner regions and optionally with sharp-edged inner corners.

15. Mould segment of a vulcanizing mould for a pneumatic vehicle tyre for forming the profiling of the tread of the pneumatic vehicle tyre, having a metallic base part (6) and having ribs (3) for forming channels which encircle and/or delimit profile elements,
**characterized**
**in that** the base part (6) has a milled-out rib skeleton (8) consisting of ribs (8'), the arrangement and the profile of which at least partially correspond to the arrangement and the profile of ribs (6) forming channels, into which rib skeleton (8) inserts (7) produced by an additive method and having peripheral frame parts (7b) are inserted, said frame parts completing the ribs (8') of the rib skeleton (8) to form ribs (3) forming channels.

16. Mould segment according to Claim 15, **characterized in that** it has inserts (7) which are additionally subdivided or divided by ribs.

17. Mould segment according to Claim 15 or 16, **characterized in that** the inserts (7) have bottom plates (7a), each of which consists of an additively built up inner layer (12) or of an additively built up inner layer (12) and a part of the building plate on which the inserts (7) have been built up.

18. Mould segment according to one or more of Claims 15 to 17, **characterized in that** it has inserts (7) which are provided with lamellae and/or micro-lamellae.

19. Mould segment according to one or more of Claims 15 to 18, **characterized in that** the inner layers (12) have curved outer surfaces which are the mould surfaces for forming positive surfaces of the profile elements.

20. Mould segment according to one or more of Claims 15 to 19, **characterized in that** it has inserts (7) which have sections of a shoulder decoration or of shoulder decoration ribs (2).

21. Mould segment according to Claim 15, **characterized in that** the base part (6) has milled shoulder decoration ribs (2) with decorative elements (5) milled on the surface.

22. Mould segment according to one or more of Claims 15 to 21, **characterized in that** the rib skeleton (8) on the base part (6) between its ribs (8') and optionally between its ribs (8') and the shoulder decoration ribs (2) has depressions with flat bottom surfaces (9), the orientation of which on the base part (6) is adapted to the intended outer contour of the tread of the tyre to be vulcanized, the depressions having a depth which is adapted to the thickness of the bottom plates (7a) of the inserts (7).

23. Mould segment according to one or more of Claims 15 to 22, **characterized in that** the base part (6) has ventilation holes (11a) which reach into the bottom surfaces (9) of the depressions.

24. Mould segment according to one or more of Claims 15 to 23, **characterized in that** the bottom plates (7a) of the inserts (7) are penetrated by ventilation holes (11b), the positions of which correlate with the positions of the ventilation holes (11a) in the base part (6).

25. Mould segment according to one or more of Claims 15 to 24, **characterized in that** the depressions in the base part (6) have rounded corner regions, the inserts (7) having correspondingly rounded outer corner regions and optionally sharp-edged inner corners.

26. Mould segment according to one or more of Claims 15 to 25, **characterized in that** the base part (6) consists of a steel alloy or of an aluminium alloy.

27. Vulcanizing mould for pneumatic vehicle tyres, which contains a segment ring with mould segments according to one or more of Claims 15 to 26.

## Revendications

1. Procédé de fabrication d'un segment de moule d'un moule de vulcanisation pour un pneumatique de véhicule destiné à former le profilage d'une bande de roulement, avec une partie de base métallique (6) avec un côté de moule avec des nervures (3) qui forment des rainures entourant ou délimitant des éléments de profil,
**caractérisé en ce**
**qu'**on fraise dans la pièce de base (6) un squelette de nervures (8) composé de nervures (8') dont l'agencement et le tracé coïncident au moins partiellement avec l'agencement et le tracé de nervures (3) formant des rainures,
des inserts (7) avec des parties de cadre (7b) situées sur les bords sont construits au moyen d'un procédé additif,
les inserts (7) étant insérés dans le squelette de nervures (8), et les parties de cadre (7b) complétant ainsi les nervures (8') du squelette de nervures (8) en les nervures (3) formant les rainures.

2. Procédé selon la revendication 1, **caractérisé en ce que** les inserts (7), y compris des lamelles (4) et/ou des microlamelles, sont construits de manière additive.

3. Procédé selon la revendication 1 ou 2, **caractérisé en ce que** les inserts (7), de préférence y compris des couches intérieures (12), sont construits de manière additive sur une plaque de construction (10), sont découpés dans la plaque de construction (10) avec la partie de la plaque de construction sur laquelle ils sont construits, de telle sorte que les parties de la plaque de construction forment conjointement ou forment des plaques de fond (7a) des inserts (7).

4. Procédé selon une ou plusieurs des revendications 1 à 3, **caractérisé en ce que** les inserts (7), y compris des couches intérieures (12), sont construits de manière additive sur une plaque de construction (10), les inserts (7) étant ensuite séparés de la plaque de construction (10), de telle sorte que les couches intérieures (12) forment des plaques de fond (7a) des inserts (7).

5. Procédé selon une ou plusieurs des revendications 1 à 3, **caractérisé en ce que** les inserts (7), de préférence y compris des couches intérieures (12), sont construits de manière additive sur des parties de plaque de construction adaptées aux inserts (7), notamment découpées dans une plaque de construction (10).

6. Procédé selon une ou plusieurs des revendications 1 à 5, **caractérisé en ce que** des couches intérieures (12) d'inserts (7) avec au moins une structure superficielle sont construites de manière additive.

7. Procédé selon une ou plusieurs des revendications 1 à 6, **caractérisé en ce que** des inserts (7) sont construits de manière additive, lesquels sont divisés ou segmentés par des nervures supplémentaires.

8. Procédé selon une ou plusieurs des revendications 1 à 7, **caractérisé en ce que** des inserts (7) sont construits de manière additive, lesquels présentent des sections d'un décor d'épaulement ou de nervures de décor d'épaulement (2).

9. Procédé selon une ou plusieurs des revendications 1 à 8, **caractérisé en ce que** des nervures de décor d'épaulement (2) sont fraisées sur la partie de base (6) avec des éléments décoratifs superficiels (5).

10. Procédé selon une ou plusieurs des revendications 1 à 9, **caractérisé en ce qu'**entre les nervures (8') du squelette de nervures (8), des cavités sont fraisées avec des surfaces de fond (9) planes dont l'orientation sur la partie de base (6) est adaptée au contour extérieur prévu de la bande de roulement du pneu à vulcaniser, les cavités étant fraisées à une profondeur adaptée à l'épaisseur des plaques de fond (7a) des inserts (7).

11. Procédé selon une ou plusieurs des revendications 1 à 10, **caractérisé en ce que** des trous d'aération (11a) s'étendant jusque dans les surfaces de fond (9) des cavités sont réalisés dans la partie de base (6).

12. Procédé selon une ou plusieurs des revendications 1 à 11, **caractérisé en ce que** la plaque de construction (10) est pourvue de trous d'aération (11b) et éventuellement de trous taraudés dont les positions sont en corrélation avec les positions des trous d'aération (11a) dans la partie de base (6).

13. Procédé selon une ou plusieurs des revendications 1 à 12, **caractérisé en ce que** les couches intérieures (12) des inserts (7) sont construites en laissant des trous dont les positions coïncident avec les positions des trous d'aération (11b) dans la plaque de construction (10).

14. Procédé selon une ou plusieurs des revendications 1 à 13, **caractérisé en ce que** les cavités dans la partie de base (6) sont fraisées avec des zones d'angle arrondies, les inserts (7) étant construits avec des zones d'angle extérieures arrondies de manière correspondante et éventuellement avec des angles intérieurs à arêtes vives.

15. Segment de moule d'un moule de vulcanisation pour un pneumatique de véhicule pour former le profilage de la bande de roulement du pneumatique de véhicule, avec une partie de base métallique (6) et avec des nervures (3) pour former des rainures qui entourent et/ou délimitent des éléments de profil,
**caractérisé en ce**
**que** la partie de base (6) présente un squelette de nervures (8) fraisé composé de nervures (8') dont l'agencement et le tracé coïncident au moins partiellement avec l'agencement et le tracé de nervures (6) formant des rainures, dans lequel squelette de nervures (8) sont insérés des inserts (7) fabriqués selon un procédé additif avec des parties de cadre (7b) situées sur les bords, qui complètent les nervures (8') du squelette de nervures (8) en nervures (3) formant des rainures.

16. Segment de moule selon la revendication 15, **caractérisé en ce qu'**il présente des inserts (7) qui sont en outre divisés ou segmentés par des nervures.

17. Segment de moule selon la revendication 15 ou 16, **caractérisé en ce que** les inserts (7) présentent des plaques de fond (7a), chacune étant constituée d'une couche intérieure (12) construite de manière additive, ou d'une couche intérieure (12) construite de manière additive et d'une partie de la plaque de construction sur laquelle les inserts (7) ont été construits.

18. Segment de moule selon une ou plusieurs des revendications 15 à 17, **caractérisé en ce qu'**il présente des inserts (7) qui sont pourvus de lamelles et/ou de microlamelles.

19. Segment de moule selon une ou plusieurs des revendications 15 à 18, **caractérisé en ce que** les couches intérieures (12) présentent des surfaces extérieures incurvées qui sont les surfaces de moulage pour former des surfaces positives des éléments de profil.

20. Segment de moule selon une ou plusieurs des revendications 15 à 19, **caractérisé en ce qu'**il présente des inserts (7) présentant des section d'un décor d'épaulement ou de nervures de décor d'épaulement (2).

21. Segment de moule selon la revendication 15, **caractérisé en ce que** la partie de base (6) présente des nervures décoratives d'épaulement fraisées (2) avec des éléments décoratifs fraisés de manière superficielle (5).

22. Segment de moule selon une ou plusieurs des revendications 15 à 21, **caractérisé en ce que** le squelette de nervures (8) présente sur la partie de base (6), entre ses nervures (8') et éventuellement entre ses nervures (8') et les nervures décoratives d'épaulement (2), des cavités avec des surfaces de fond (9) planes, dont l'orientation sur la partie de base (6) est adaptée au contour extérieur prévu de la bande de roulement du pneu à vulcaniser, les cavités présentant une profondeur adaptée à l'épaisseur des plaques de fond (7a) des inserts (7).

23. Segment de moule selon une ou plusieurs des revendications 15 à 22, **caractérisé en ce que** la partie de base (6) présente des trous d'aération (11a) s'étendant jusque dans les surfaces de fond (9) des cavités.

24. Segment de moule selon une ou plusieurs des revendications 15 à 23, **caractérisé en ce que** les plaques de fond (7a) des inserts (7) sont traversées par des trous d'aération (11b) dont les positions sont en corrélation avec les positions des trous d'aération (11a) dans la partie de base (6).

25. Segment de moule selon une ou plusieurs des revendications 15 à 24, **caractérisé en ce que** les cavités dans la partie de base (6) présentent des zones d'angle arrondies, les inserts (7) présentant des zones d'angle extérieures arrondies de manière correspondante et éventuellement des angles intérieurs à arêtes vives.

26. Segment de moule selon une ou plusieurs des revendications 15 à 25, **caractérisé en ce que** la partie de base (6) est constituée d'un alliage d'acier ou d'aluminium.

27. Moule de vulcanisation pour pneumatiques de véhicule, contenant un anneau segmenté avec des segments de moule selon une ou plusieurs des revendications 15 à 26.
